# EUROPÄISCHE PATENTSCHRIFT

(11) **EP 2 300 630 B1**
(45) Veröffentlichungstag und Bekanntmachung des Hinweises auf die Patenterteilung: **01.05.2019**
(21) Anmeldenummer: 09757215.0
(22) Anmeldetag: 28.05.2009
(51) Int. Cl.: C23C 4/11, C23C 4/129, C23C 4/123, C23C 4/134

(54) **VERFAHREN ZUR HERSTELLUNG VON THERMISCH GESPRITZTEN AL2O3-SCHICHTEN MIT EINEM HOHEN KORUNDGEHALT OHNE EIGENSCHAFTSMINDERNDE ZUSÄTZE**
METHOD FOR THE PRODUCTION OF THERMAL SPRAYED AL2O3 LAYERS HAVING A HIGH CONTENT OF CORUNDUM WITHOUT ANY PROPERTY-REDUCING ADDITIVES
PROCÉDÉ DE FABRICATION DE COUCHES DE AL2O3 PULVÉRISÉES THERMIQUEMENT À HAUTE TENEUR EN CORINDON SANS ADDITIFS DIMINUANTES DES PROPRIETES DE LA COUCHE

(30) Priorität: 30.05.2008 DE 102008026101
(43) Veröffentlichungstag der Anmeldung: 30.03.2011
(73) Patentinhaber: Fraunhofer-Gesellschaft zur Förderung der angewandten Forschung, 80686 München (DE)
(72) Erfinder: TOMA, Filotheia-Laura, 01309 Dresden (DE); BERGER, Lutz-Michael, 01187 Dresden (DE); STAHR, Carl, Christoph, 63796 Kahl am Main (DE); NAUMANN, Tobias, 01309 Dresden (DE); LANGNER, Stefan, 01099 Dresden (DE)
(86) Internationale Anmeldenummer: PCT/EP2009/003797
(87) Internationale Veröffentlichungsnummer: WO 2009/146832

(56) Entgegenhaltungen:
- EP-A- 0 621 079
- WO-A-2006/116844
- DE-A1- 3 012 515
- GB-A- 2 073 169
- US-A- 4 487 841
- SWINDEMAN C J ET AL: "An investigation of thermally-sprayed aluminum oxide coatings for high-temperature electrostatic chucks (ESCs)" SEMICONDUCTOR MANUFACTURING, 1995., IEEE/UCS/SEMI INTERNATIONAL SYMPOS IUM ON AUSTIN, TX, USA 17-19 SEPT. 1995, NEW YORK, NY, USA,IEEE, US, 17. September 1995 (1995-09-17), Seiten 226-232, XP010193407 ISBN: 978-0-7803-2928-7

## Beschreibung

Die Erfindung betrifft thermisch gespritzte Aluminiumoxidschichten mit einem hohen Gehalt von α-Al₂O₃ (Korund) ohne eigenschaftsmindernde Zusätze sowie geringer Porosität. Die Schichten können mit verschiedenen thermischen Spritzverfahren aus wässrigen oder alkoholischen Suspensionen mit suspergierten α-Al₂O₃-Partikeln mit einer Größe > 100 nm hergestellt werden. Die Erfindung verbessert die Eigenschaften thermisch gespritzter Aluminiumoxidschichten nachhaltig. Ihr Einsatz ist auf Grund des hohen α-Al₂O₃-Anteils besonderes zweckmäßig bei Bauteilen, die eine hohe elektrische Isolation und einen verbesserten Verschleißwiderstand erfordern. Die Korrosionseigenschaften der Schichten und somit die Beständigkeit in aggressiven Medien werden verbessert. Zusätzlich ergibt sich eine bessere Hochtemperaturbeständigkeit, da die Volumenänderungen durch die Phasenumwandlung stark vermindert werden. Durch die verminderte Reaktion der Schichten mit der Luftfeuchtigkeit der Umgebung wird die Langzeitstabilität der Eigenschaften verbessert.

Thermisch gespritzte Aluminiumoxidschichten besitzen eine hohe technische Bedeutung und werden aus Aluminiumoxid-Beschichtungspulvern zumeist durch atmosphärisches Plasmaspritzen (APS), aber auch durch andere Verfahren aus der Verfahrensgruppe des thermischen Spritzens, wie dem Hochgeschwindigkeitsflammspritzen (HVOF) hergestellt. Die Schichten werden überwiegend für den Verschleißschutz, die elektrische Isolation und als Dielektrikum angewendet. Wann immer - unabhängig vom verwendeten Verfahren - diese thermisch gespritzten Al₂O₃-Schichten Anwendung finden, werden damit gleichzeitig die typischen Eigenschaften von Al₂O₃-Sinterkeramiken (hoher Schmelzpunkt, hoher elektrischer Widerstand bis hin zu hohen Temperaturen, sehr gute mechanische Eigenschaften und weitgehende chemische Beständigkeit) assoziiert. Ein wesentlicher Unterschied zum gesinterten Al₂O₃ besteht jedoch darin, dass sich gespritzte Schichten aus unterschiedlichen Formen (Modifikationen) des Al₂O₃zusammensetzen und dies, obwohl das Ausgangsmaterial in der Regel reiner, thermodynamisch stabiler Korund (α-Al₂O₃ Phase) ist. In nahezu allen Schichten existieren überwiegend Übergangstonerden (darunter die γ-Phase) in der Schicht. Dieses für Aluminiumoxid charakteristische Verhalten ist schon lange bekannt und wurde von McPherson (J. Mater. Sci., 8 (1973) 6, 851 - 858) und später von Müller und Kreye (Schweißen und Schneiden, 53 (2001) 6, 336-345) eingehend beschrieben. Nach DE 33 10 650 kann durch einen aufwändigen zusätzlichen Verfahrensschritt, wie das Umschweißen mittels Elektronen- oder Laserstrahl, eine Rückumwandlung in α-Al₂O₃ erreicht werden. Thermisch gespritzte Schichten werden derzeit unter Inkaufnahme der Umwandlung von α-Al₂O₃ in überwiegend Übergangstonerden hergestellt und eingesetzt. Dadurch reichen insbesondere die mechanischen und elektrischen Eigenschaften nicht an die hervorragenden Eigenschaften des gesinterten Korunds heran. Unterschiede zum gesinterten Material liegen hauptsächlich in der möglichen Wasseraufnahme beim Einsatz in feuchten Atmosphären, geringeren mechanischen und elektrisch isolierenden Eigenschaften. Eine Verbesserung der Schichteigenschaften ist für viele bestehende und die Entwicklung neuer Anwendungen dringend notwendig.

Eine Rückumwandlung der Phasen in der Schicht in α-Al₂O₃ kann durch eine Wärmebehandlung bei 1200 °C und höher erfolgen. Durch die sehr hohen Temperaturen ist dies insbesondere für Schichten auf metallischen Substraten ungeeignet. Darüber hinaus kommt es durch die Phasenumwandlung zu starken Volumenveränderungen, die zu Defekten in den Schichten führen. So wird im Stand der Technik von DE 30 12 515 A1 (analog GB 2 073 169 A und US 4,487,841) erwähnt, dass im Resultat der Phasenumwandlung durch eine Wärmebehandlung der Aluminiumoxidschichten bei Temperaturen höher als 1180°C die ursprüngliche Porosität von 6-8% auf 9-10% steigt. Um die Phasenumwandlung im Spritzprozess zu unterdrücken, können dem α-Al₂O₃ verschiedene Zusätze, zumeist Cr₂O₃, mechanisch beigemischt werden. Für diesen Fall ist die Stabilisierung der α -Phase vom verwendeten Spritzprozess abhängig und gelingt nur mit dem wenig verbreiteten wasserstabilisierten Plasmaspritzen (WSP). Eine andere Lösung besteht in der Verwendung von Beschichtungspulvern, die aus Mischkristallen bestehen. Effektiv ist z.B. die Verwendung von Al₂O₃-Cr₂O₃-Mischkristallen (C.C. Stahr, S. Saaro, L.-M. Berger, J. Dubsky, K. Neufuss, M. Hermann, J. Thermal Spray Technology, 18 (2007) 5-6, 822 - 830). In jedem Fall bedingen die Zusätze auch einen Eigenschaftsabfall im Vergleich mit dem reinen Korund Swindeman et al. (Proceedings of International Symposium on Semiconductor Manufacturing, 1995, New York, NY , IEEE US, pages 226-232) haben den Einfluss von Spritzparametern auf die Modifizierung der elektrischen Eigenschaften von Aluminiumoxid-Schichte im Sprühzustand untersucht.

In den letzten Jahren wurden für verschiedene Spritzverfahren Verfahrensvarianten entwickelt, die als Ausgangswerkstoff an Stelle von Beschichtungspulvern Suspensionen zumeist nanoskaliger Pulver bzw. Lösungen anorganischer und organischer Stoffe verwenden. Ein Vorteil dieser Verfahrensvarianten besteht in der Vermeidung von aufwändigen Verfahrensschritten bei der Beschichtungspulverherstellung. Die Verwendung von Suspensionen ist u.a. für das APS (WO 2006/043006 A1), das induktive Plasmaspritzen (US 5,609,921) oder das HVOF bekannt (DE 10 2005 0380 453 A1, WO2006/116844 A1).

Es sind unter anderem auch Arbeiten zur Herstellung von Aluminiumoxidschichten aus Suspensionen bekannt. Durch Verwendung einer Suspension mit 10 masse-% α-Al₂O₃(Korngröße 27-43 nm) wurden Schichten, bestehend hauptsächlich aus α-Al₂O₃ und wenig γ-Al₂O₃, aber hoher offener Porosität und geringer Kohäsion in der Schicht hergestellt (J. Oberste-Berghaus, S. Bouaricha, J.-G. Legoux, C. Moreau, Proceed. of International Thermal Spray Conference 2005 - Thermal Spray Connects: Explore its surfacing potential, Basel, Switzerland (2005), CD-Rom version). Ein sehr hoher Anteil an α-Al₂O₃ -Anteil wird für Schichten, hergestellt aus einer alkoholischen Suspension nanoskaliger α-Al₂O₃ -Partikel (50-300 nm, hergestellt durch Wärmebehandlung von γ-Al₂O₃) beschrieben (Z. Chen et al., J. Mater. Sci., 39 (2004) 13, 41 71 - 4178).

Die Schicht besteht jedoch nur aus den zusammengesinterten Partikeln, die für
Spritzschichten charakteristische Lamellarstruktur fehlt. Angaben zur Porosität werden nicht gemacht, aus der Beschreibung kann geschlossen werden, dass die Schichten hochporös sind, und keinen praktischen Gebrauchswert hatten.

Die Herstellung von Aluminiumoxidschichten mit hohem Anteil an α-Al₂O₃ mit akzeptabler Porosität ist bis jetzt noch nicht gelungen. Dies belegt US 2006/0289405 A1; Absätze 0045-0047, in der durch Suspensionsspritzen hergestellte Schichten beschrieben werden. Die Schicht bestand aus 88 % γ -Al₂O₃ bei einer Porosität von 11 % und wurde aus einer alkoholischen Suspension von α-Al₂O₃ -Partikeln (10 masse-%) mit einer Korngröße 29-68 nm hergestellt.

Nach US Patent 2002/6,447,848 B1 (Table 2) erhält man aus einem Pulver der Korngröße 35 nm Schichten bestehend aus γ -Al₂O₃.

Es ist Aufgabe der Erfindung ein Verfahren zur Herstellung von Al₂O₃ - Schichten durch Suspensionsspritzen anzugeben.

Gleichzeitig ist es nunmehr Aufgabe der vorliegenden Erfindung Aluminiumoxidschichten mit hohem Anteil an α -Al₂O₃ ohne Verwendung von eigenschaftsmindernde Zusätzen und geringer Porosität für den praktischen Einsatz vorzuschlagen. Dadurch werden die mechanischen, elektrischen (Isolation) und korrosiven Eigenschaften der Aluminiumoxidschichten nachhaltig verbessert. Die Schichten besitzen eine hohe Langzeitstabilität ihrer Eigenschaften beim Einsatz in feuchter Atmosphäre. Die Aufgabe soll ohne zusätzliche Wärmebehandlungen der Schichten gelöst werden.

Erfindungsgemäß werden diese Aufgaben durch das Verfahren zur Herstellung einer thermisch gespritzten Al₂O₃-Schicht, wie es im Anspruch 1 beschrieben ist, gelöst. Die dazugehörenden Unteransprüche 2 bis **5** stellen vorteilhafte Ausgestaltungen des Verfahrens dar.

Erfindungsgemäß werden diese Aluminiumoxidschichten durch Suspensionsspritzen aus einer wässrigen oder alkoholischen Suspension von reinem α-Al₂O₃ mit einer Korngröße > 100 nm hergestellt. Prinzipiell kann auch eine Suspension des reinen α-Al₂O₃ aus einem Gemisch von Wasser und Alkohol verwendet werden. Vorzugsweise wird für die Herstellung der wässrigen oder alkoholischen Suspension reines α-Al₂O₃ mit einer Korngröße > 400nm verwendet. Günstigerweise besitzt die Suspension eine geringe Viskosität von < 1 mPa•s. Für eine hohe Stabilität wird bei wässrigen Suspensionen ein pH-Wert im Bereich von 3 bis 5 eingestellt.

Die Schichten werden durch ein Verfahren aus der Gruppe des thermischen Spritzens hergestellt. Für bestimmte Anwendungsfälle wird vorzugsweise das atmosphärische Plasmaspritzen (APS) verwendet. Weiterhin kann für andere Anwendungsfälle vorzugsweise das Hochgeschwindigkeitsflammspritzen (HVOF) verwendet werden.

Der Gehalt von α-Al₂O₃ in der Schicht kann bei gleichbleibend niedriger Porosität durch verschiedene verfahrenstechnische Maßnahmen gesteigert werden. Dazu gehören eine Optimierung der Plasmagaszusammensetzung beim APS, bzw. des Sauerstoff/ Brennstoffverhältnisses beim HVOF, der Spritzabstand, die Relativgeschwindigkeit des Brenners zum Substrat, sowie die Durchsatzmenge der Suspension. Durch Suspensionsspritzen können gegenüber Verfahren die Pulver oder Granulate als Ausgangswerkstoff verwenden, relativ dünne Schichten < 20 µm durch einfaches Überfahren des Substrates hergestellt werden. Durch die Anzahl der Übergänge oder Veränderung des Durchsatzes kann die Schichtdicke reguliert werden.

Bei mehreren Übergängen sind erfindungsgemäße Schichten mit Dicken > 100 µm leicht herstellbar.

Erfindungsgemäß wird für die Suspensionen ein α-Al₂O₃ -Pulver hoher Reinheit verwendet. Die Reinheit des α-Al₂O₃-Pulvers beträgt dabei mindestens 98% (vorzugsweise mindestens 99,8%). Die Suspension wird mit einem fokussierten Strahl über einen Injektor in die Plasmafackel bzw. in die HVOF-Flamme eingespritzt.

Für die wässrige oder alkoholische Suspension wird vorteilhafterweise ein Feststoffgehalt von bis zu 25 Gewichts-% eingestellt.

Erfindungsgemäß wird der hohe Anteil an α-Al₂O₃ in den Schichten ohne zusätzliche Wärmebehandlungen hergestellt.

Die Anwendung der hergestellten Schichten ist auf Grund des hohen Anteils von α-Al₂O₃ besonders vielversprechend für die elektrische Isolation, als Dielektrikum und als verschleiß- und korrosionsbeständige Schicht. Die Schichten können durch ihre bessere Hochtemperaturbeständigkeit bei Temperaturen höher als die Temperatur der Phasenumwandlung eingesetzt werden. Durch die verminderte Reaktion der Schichten mit Luftfeuchtigkeit der Umgebung besitzen sie eine hohe Langzeitstabilität der Eigenschaften.

Die hergestellten thermisch gespritzten Aluminiumoxidschichten weisen einen hohen α-Al₂O₃ Gehalt (Gehalt an Korund) von mindestens 72 vol.-% α-Al₂O₃ und eine Porosität von maximal 19% auf. Vorzugsweise haben diese Schichten einen Anteil von mindestens 80 vol-% α-Al₂O₃ und eine Porosität von maximal 10%. Der Nachweis des α-Al₂O₃- Gehaltes erfolgt durch Röntgenphasenanalyse, der Nachweis der Porosität durch Bildanalyse. Die Schichten haben vorteilhafterweise einen spezifischen elektrischen Widerstand von > 1•10¹² Ohm*cm. Vorzugsweise haben diese Schichten einen spezifischen elektrischen Widerstand von > 1•10¹³ Ohm*cm. Die Reinheit der Schichten wird hauptsächlich durch das verwendete Ausgangspulver beeinflusst. Im ungünstigen Fall kann das Aluminiumoxid beim Spritzprozess verunreinigt werden. Vorteilhafterweise haben die Schichten eine Reinheit von mindestens 97%. Vorzugsweise haben die Schichten eine Reinheit von mindestens 98%.

Durch den hohen Korundgehalt und die geringe Porosität besitzen die Schichten eine sehr hohe Langzeitstabilität, insbesondere ihrer elektrischen und mechanischen Eigenschaften, bei ihrem Einsatz in feuchter Umgebung. Vorteilhafterweise wird diese Langzeitstabilität der Eigenschaften an Luft mit einer relativen Feuchtigkeit von 50% erreicht. Vorzugsweise wird diese Langzeitstabilität der Eigenschaften auch an Luft mit einer relativen Feuchtigkeit von 70% erreicht.

Das erfindungsgemäße Verfahren und die hergestellten Schichten sollen in den nachfolgenden **Ausführungsbeispielen** näher beschrieben werden.

### Beispiel 1

Als Ausgangstoff wurde ein α-Al₂O₃ -Pulver (Reinheit > 99,8% Al₂O₃) mit der kommerziellen Bezeichnung A-16SG (von der Firma Almatis GmbH, Deutschland) und mit einer Korngröße von d₅₀=0,4 µm (d₉₀=1,5 µm) verwendet. Eine wässrige (25 Masse-%) Suspension wurde mit destilliertem Wasser, dessen pH-Wert= 4 mit einer wässrigen Lösung von HCl 10% eingestellt wurde, hergestellt. Die Suspension wurde die ersten 15 min magnetisch gerührt, danach 10 min in ein Ultraschallbad eingesetzt und anschließend noch einmal magnetisch umgerührt um die Agglomeration der Partikel in der Suspension zu vermindern und die Homogenität zu verbessern. Die so hergestellte Suspension zeichnet sich durch eine sehr geringe Viskosität (< 1 mPa*s) aus. Die Suspension wurde über einen Druckbehälter (Krautzberger GmbH, Deutschland) mit 0,5 MPa, durch Injektion mit Hilfe einer 0.25 mm-Düse, in die Brennkammer einer HVOF-Anlage (Top Gun, GTV mbH, Deutschland, 8 mm-Düse) eingebracht. Die Versuche wurden unter Verwendung von Ethen als Brenngas (60 l/min) und Sauerstoff (165 l/min) durchgeführt. Unmittelbar vor dem Spritzen durch Sandstrahlen (3 bar Druck) aufgeraute Stahl/Edelstahlsubstrate wurden verwendet. Der Spritzabstand betrug 110 mm.

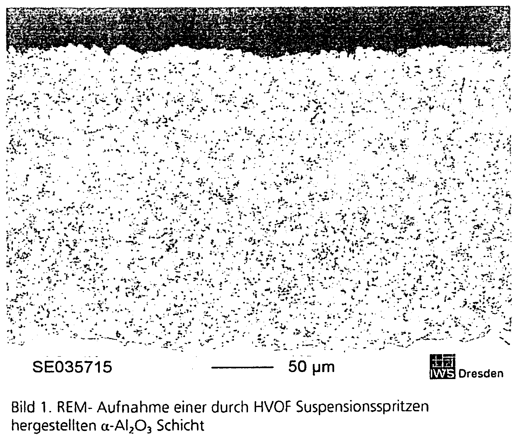

Dabei wird die Schichtdicken von 230 µm erzielt. Eine REM-Mikrostruktur der Schicht wir in Bild 1 dargestellt. Die Porosität der Beschichtungen wird durch Bildanalyse mit Hilfe des Scionlmage Software von NIMH (National Institute of Mental Health, USA) durchgeführt. Die Porosität der Beschichtung wurde mit 7,5% berechnet. Durch eine Röntgenphasenanalyse wurden in den gespritzten Schichten 74 vol.-% α-Al₂O₃ Phase nachgewiesen. Der spezifische elektronische Widerstand dieser Schicht betrug 1,2•10¹³ Ohm • cm.

### Beispiel 2

Eine wässrige Suspension, wie im Beispiel 1, wurde durch einen 0,3 mm-Injektor in die Plasmafackel einer atmosphärischen Plasmaspritzanlage (APS, 6-mm Düse, GTV mbH, Deutschland) radial injiziert. Dieser Injektor ist mit einem Winkel von 15° entgegen der horizontalen Achse der Plasmaflamme außerhalb des Brenners justiert. Die Injektion der Suspension erfolgt mit einem Druck von 0,2 MPa. Die Plasmaleistung betrug 55 kW, als Plasmagase wurde ein Argon (40l/min) Wasserstoff (10 l/min) Gasgemisch verwendet. Der Spritzabstand betrug 60 mm. Die Schicht (150 µm Dicke) hat eine Porosität von 8,5% und einen Gehalt von 80 vol.-% α-Al₂O₃ Phase. Der spezifische elektrische Widerstand dieser Schicht betrug 2,9•10¹² Ohm • cm.

### Beispiel 3

Hier wurde eine alkoholische Suspension mit einem Gehalt von 20 bis 25 Gewichts-% Ausgangspulver aus Beispiel 1 in Ethanol verwendet. Zur Erhöhung der Stabilität der Suspension kamen 2 Gewichts-% / Pulvergewicht eines organischen Dispergierhilfsmittels (KV9056, Firma Zschimmer & Schwarz, Deutschland) zum Einsatz. Mittels Ultraschallbad und Magnetrührwerk konnte die Dispersion und die Homogenität der Suspension verbessert werden.

Die Suspension wurde mit APS gespritzt. Die Plasmaleistung betrug 38 kW, als Plasmagase wurden Argon (40 l/min)/Wasserstoff (6 l/min) verwendet. Der Spritzabstand betrug 50 mm. Die Schichten (> 110 µm Dicke) besaßen eine Porosität von 19%. Durch die Röntgenphasenanalyse wurden 72 vol.-% α-Al₂O₃ -Phase nachgewiesen. Der spezifische elektrische Widerstand dieser Schicht betrug 1,4•10¹² Ohm • cm.

### Beispiel 4

Eine Suspension wie in Ausführungsbeispiel 3 wurde verwendet. Die Suspension wurde mit APS gespritzt. Die Plasmaleistung betrug 51 kW, als Plasmagase wurden Argon (60 l/min)/ Helium (25 l/min) verwendet. Die Schichten (> 160 µm Dicke) besaßen eine Porosität von 11,5%. Durch die Röntgenphasenanalyse wurden 76 vol.-% α-Al₂O₃ Phase nachgewiesen.

Mit den hergestellten Al₂O₃ -Schichten und dem erfinderischen Verfahren zu ihrer Herstellung konnten alle Nachteile des Standes der Technik beseitigt werden.

## Patentansprüche

1. Verfahren zur Herstellung von Al₂O₃-Schichten, ohne eigenschaftsmindernde Zusätze, wobei diese Al₂O₃-Schichten einen Gehalt an α-Al₂O₃ von mindestens 72 vol.%, wobei der hohe Anteil an α-Al₂O₃ in den Schichten ohne zusätzliche Wärmebehandlung hergestellt wird, eine Porosität von maximal 19%, und einem spezifischen elektrischen Widerstand von > 1·10¹² Ohm·cm aufweisen, wobei die Schicht eine Langzeitstabilität der Eigenschaften in Luft mit einer relativen Luftfeuchtigkeit von 50% aufweist, **dadurch gekennzeichnet, dass** diese Herstellung unter Verwendung von wässrigen oder alkoholischen Suspensionen aus reinem α-Al₂O₃ mit einer Reinheit von mindestens 98% und mit einer Korngröße von > 100 nm mittels eines Verfahrens aus der Gruppe des thermischen Spritzens erfolgt, wobei für die wässrige oder alkoholische Suspension ein Feststoffgehalt von bis zu 25 Gewichts-% eingestellt wird und als Verfahren aus der Gruppe des thermischen Spritzens das atmosphärische Plasmaspritzen oder das Hochgeschwindigkeitsflammspritzen (HVOF) eingesetzt werden.

2. Verfahren nach Anspruch 1, **dadurch gekennzeichnet, dass** eine wässrige oder alkoholische Suspension aus reinem α-Al₂O₃ mit einer Korngröße von > 400 nm verwendet wird.

3. Verfahren nach Anspruch 1 oder 2, **dadurch gekennzeichnet, dass** für die wässrige oder alkoholische Suspension ein α-Al₂O₃-Pulver mit einer Reinheit von mindestens 99,8% verwendet wird.

4. Verfahren nach mindestens einem der Ansprüche 1 bis 3, **dadurch gekennzeichnet, dass** die Schicht mindestens 80 vol% α-Al₂O₃ enthält.

5. Verfahren nach mindestens einem der Ansprüche 1 bis 4, **dadurch gekennzeichnet, dass** die Schicht eine Langzeitstabilität der Eigenschaften in Luft mit einer relativen Luftfeuchtigkeit von 70% aufweist.

## Claims

1. Process for producing Al₂O₃ layers, without property-impairing additives, where these Al₂O₃ layers have a content of α-Al₂O₃ of at least 72% by volume, where the high proportion of α-Al₂O₃ in the layers is produced without additional heat treatment, a porosity of not more than 19% and a specific electrical resistance of >1 ·10¹² ohm·cm, where the layer has long-term stability of the properties in air having a relative atmospheric humidity of 50%, **characterized in that** this production is carried out using aqueous or alcoholic suspensions of pure α-Al₂O₃ having a purity of at least 98% and a particle size of >100 nm by means of a process from the group of thermal spraying, where a solids content of up to 25% by weight is set for the aqueous or alcoholic suspension and atmospheric plasma spraying or high-velocity flame spraying (HVOF) is used as process from the group of thermal spraying.

2. Process according to Claim 1, **characterized in that** an aqueous or alcoholic suspension of pure α-Al₂O₃ having a particle size of >400 nm is used.

3. Process according to Claim 1 or 2, **characterized in that** an α-Al₂O₃ powder having a purity of at least 99.8% is used for the aqueous or alcoholic suspension.

4. Process according to at least one of Claims 1 to 3, **characterized in that** the layer contains at least 80% by volume of α-Al₂O₃.

5. Process according to at least one of Claims 1 to 4, **characterized in that** the layer has long term stability of the properties in air having a relative atmospheric humidity of 70%.

## Revendications

1. Procédé de fabrication de revêtements d'Al₂O₃, sans additifs réduisant les propriétés, ces revêtements d'Al₂O₃ présentant un contenu en α-Al₂O₃ d'au moins 72 % en volume, la proportion élevée d'α-Al₂O₃ dans les revêtements étant obtenue sans traitement thermique supplémentaire, une porosité maximale de 19 %, et une résistance électrique spécifique > 1·10¹² Ohm·cm, le revêtement présentant une stabilité à long terme des propriétés dans de l'air ayant une humidité relative de l'air de 50 %, **caractérisé en ce que** cette fabrication a lieu en utilisant des suspensions aqueuses ou alcooliques d'α-Al₂O₃ pur ayant une pureté d'au moins 98 % et ayant une taille de particules > 100 nm par un procédé du groupe de la projection thermique, un contenu en matières solides jusqu'à 25 % en poids étant ajustée pour la suspension aqueuse ou alcoolique, et la projection thermique par plasma dans l'air sous pression atmosphérique ou la projection thermique par flamme à haute vitesse (HVOF) étant utilisée en tant que procédé du groupe de la projection thermique.

2. Procédé selon la revendication 1, **caractérisé en ce qu'**une suspension aqueuse ou alcoolique d'α-Al₂O₃ pur ayant une taille de particules > 400 nm est utilisée.

3. Procédé selon la revendication 1 ou 2, **caractérisé en ce que**, pour la suspension aqueuse ou alcoolique, une poudre d'α-Al₂O₃ ayant une pureté d'au moins 99,8 % est utilisée.

4. Procédé selon au moins l'une quelconque des revendications 1 à 3, **caractérisé en ce que** le revêtement contient au moins 80 % en volume d'α-Al₂O₃.

5. Procédé selon au moins l'une quelconque des revendications 1 à 4, **caractérisé en ce que** le revêtement présente une stabilité à long terme des propriétés dans de l'air ayant une humidité relative de l'air de 70 %.
